(19) Europäisches Patentamt
European Patent Office
Office européen des brevets

(11) **EP 1 148 334 A1**

(12) **EUROPÄISCHE PATENTANMELDUNG**

(43) Veröffentlichungstag:
**24.10.2001 Patentblatt 2001/43**

(51) Int Cl.⁷: **G01N 27/22**

(21) Anmeldenummer: **01107242.8**

(22) Anmeldetag: **23.03.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **20.04.2000 DE 10019551**

(71) Anmelder: **ELK Gesellschaft für Erstellung, Layout und Konzeption elektonischer Systeme mit beschränkter Haftung**
**47805 Krefeld (DE)**

(72) Erfinder:
• **Fieseler, Markus**
**47807 Krefeld (DE)**
• **Lieser, Udo**
**47798 Krefeld (DE)**

(74) Vertreter: **Stenger, Watzke & Ring Patentanwälte**
**Kaiser-Friedrich-Ring 70**
**40547 Düsseldorf (DE)**

(54) **Verfahren und Vorrichtung zur Ermittlung der relativen Feuchte in Luft-/Gasgemischen**

(57) Der vorliegenden Erfindung liegt die Aufgabe zugrunde, ein Verfahren und eine Vorrichtung zur Ermittlung der relativen Feuchte in Luft-/Gasgemischen mittels eines Feuchtesensors, der einen zur relativen Feuchte äquivalentes, auswertbares elektrisches Signal liefert, bereitzustellen, welche bei Einsatz in mobilen Geräten oder in Bereichen mit Temperaturwechseln verläßliche Meßwerte liefern, ohne daß eine vollständige Adaption des Feuchtesensors an die Umgebungstemperatur abgewartet werden muß. Zur technischen Lösung dieser Aufgabe wird vorgeschlagen, daß die Temperatur $T_S$ des Feuchtesensors und die Temperatur $T_G$ der Umgebung an einer vom Feuchtesensor beabstandeten Position gemessen werden und das vom Feuchtesensor gelieferte Signal auf einen der Temperatur der Umgebung $T_G$ entsprechenden Wert korrigiert wird.

**Beschreibung**

Die vorliegende Erfindung betrifft ein Verfahren und eine Vorrichtung zur Ermittlung der relativen Feuchte in Luft-/Gasgemischen.

Verfahren und Vorrichtungen zur Ermittlung der relativen Feuchte in Luft-/Gasgemischen sind umfangreich bekannt. Üblicherweise verwenden diese einen Feuchtesensor, der ein auswertbares elektrisches Signal liefert, welches zur relativen Feuchte äquivalent ist. Dieses elektrische Signal kann dann zur Anzeigezwecken oder Steuer- und Regelungsmaßnahmen verwendet werden.

Zur Messung der relativen Feuchte werden sogenannte Hygrometer verwendet, die nach unterschiedlichen Verfahren arbeiten. Es sind chemische, optische und elektrische Verfahren bekannt, wobei bei letzteren Materialien verwendet werden, die in Abhängigkeit von der vorhandenen Feuchte ihr elektrisches Verhalten ändern, beispielsweise den Widerstand, die Kapazität oder dergleichen. Bei anliegenden Spannungen kann dann die Ausgangsspannung entweder direkt oder indirekt, beispielsweise nach Ermittlung einer Spannungsdifferenz oder dergleichen, zur gemessenen Feuchte in Beziehung gesetzt werden.

Anwendungsbereiche derartiger Systeme finden sich in Klima-, Heizungs-, Luftanlagen, Ventilatoren, in der Medizintechnik beispielsweise bei Inhalationsgeräten und dergleichen. Auch bei der Bearbeitung von Materialien, bei medizinischen Vorgängen und dergleichen stellt die relative Feuchte einen wichtigen Meßwert dar, der entweder für weitere Steuer-/Regelaufgaben benötigt wird oder zu Meßzwecken angezeigt werden muß.

Es ist bekannt, daß die relative Feuchte eines Luft- oder Gasgemisches von der Temperatur abhängt. Bekanntermaßen nimmt warme Luft eine größere Feuchtigkeitsmenge auf, die bei Abkühlung kondensiert und/oder niederschlägt, allgemein bekannt als der sogenannte Waschkücheneffekt oder beispielsweise bei Billenträgern bekannt durch das Beschlagen der Brillen bei einem Wechsel von einer kalten Umgebung in eine warme Umgebung, wo an den kalten Gläsern die Feuchte der warmen Umgebungsluft kondensiert.

Bei Meßgeräten zur Erfassung der Feuchtigkeit unterliegen die Feuchtesensoren den gleichen Effekten und verläßliche Meßwerte sind daher erst nach einer vollständigen Adaption des Feuchtesensors an die Temperatur der Umgebung zu erhalten.

Dies wirkt sich insbesondere negativ aus bei mobilen Meßsystemen und bei Meßsystemen in Umgebungen mit schnell wechselnder Temperatur, beispielsweise im Rahmen von Produktionsvorgängen, in Bereichen mit viel Bewegung und dergleichen.

Es sind keine Systeme bekannt, die bei wechselnden Temperaturbedingungen praktisch verzögerungslos verläßliche Meßwerte der relativen Feuchte liefern.

Ausgehend von diesem Stand der Technik liegt der vorliegenden Erfindung die **Aufgabe** zugrunde, ein Verfahren und eine Vorrichtung zur Ermittlung der relativen Feuchte in Luft-/Gasgemischen mittels eines Feuchtesensors, der einen zur relativen Feuchte äquivalentes, auswertbares elektrisches Signal liefert, bereitzustellen, welche bei Einsatz in mobilen Geräten oder in Bereichen mit Temperaturwechseln verläßliche Meßwerte liefern, ohne daß eine vollständige Adaption des Feuchtesensors an die Umgebungstemperatur abgewartet werden muß.

Verfahrensseitig wird zur technischen **Lösung** dieser Aufgabe vorgeschlagen, daß die Temperatur $T_S$ des Feuchtesensors und die Temperatur $T_G$ der Umgebung an einer vom Feuchtesensor beabstandeten Position gemessen werden und das vom Feuchtesensor gelieferte Signal auf einen der Temperatur der Umgebung $T_G$ entsprechenden Wert korrigiert wird.

Gemäß der Erfindung werden zusätzlich zu den die relative Feuchte repräsentierenden elektrischen Signal des Feuchtesensors auch die Temperatur des Feuchtesensors selbst und die Temperatur der Umgebung berücksichtigt. Ein von dem Feuchtesensor bei bekannter Temperatur des Feuchtesensors bereitgestelltes Signal kann somit bei Kenntnis der Temperatur der Umgebung auf einen realistischen Wert korrigiert werden, wozu beispielsweise die sogenannte Gasengleichung verwendet werden kann, siehe Formel 1 im Formelanhang.

Das vom Feuchtesensor gelieferte Signal repräsentiert konsequenter Weise die relative Feuchte einer Luft bei der Temperatur des Feuchtesensors selbst. Da der Feuchtesensor eine Masse aufweist, verändert sich dieser Wert bis zur vollständigen Adaption des Feuchtsensors an die Umgebungsverhältnisse. Bei Kenntnis der tatsächlichen Umgebungstemperatur, die an einem vom Feuchtesensor entfernten Ort gemessen wird, kann nun diese vom Sensor in Form eines elektrischen Signals bereitgestellte relative Feuchte auf eine der Umgebungstemperatur entsprechende Feuchte umgerechnet werden.

Verfahrensgemäß kann dazu eine Rechnereinheit verwendet werden, die mittels Maschinenprogramm oder Software die Korrektur durchführt. Gemäß einem vorteilhaften Vorschlag des Verfahrens findet die Korrektur nur statt, wenn eine Temperaturdifferenz zwischen $T_S$ und $T_G$ ermittelt wird.

Wegen der Masse des Feuchtesensors ist es von Vorteil, wenn gemäß einem Vorschlag der Erfindung diese Masse bei der Messung der Temperatur des Feuchtesensors berücksichtigt wird. Ist ein Temperaturmeßfühler direkt am Feuchtesensor angekoppelt, mißt dieser die tatsächliche Temperatur. Liegt der Temperatursensor im direkten Nahbereich zum Feuchtesensor, ist von Vorteil, wenn er die gleiche Masse wie der Feuchtesensor selbst aufweist.

Gemäß einem vorteilhaften Vorschlag der Erfindung wird für die Messung der Umgebungstemperatur $T_G$ ein Meßfühler mit kleiner Masse (Blitzthermometer) verwendet, damit dieser möglichst schnell fehlerfreie Temperaturwerte der Umgebung liefert.

Das erfindungsgemäße Verfahren ermöglicht die schnelle die praktisch verzögerungslose Ermittlung von realistischen Meßwerten für die Luftfeuchte selbst bei mobilen Systemen. Wird beispielsweise ein Handmeßgerät schnell aus einem PKW in einen zu vermessenden Raum gebracht, liefert dieses nach dem öffnungsgemäßen Verfahren unverzüglich brauchbare Meßwerte. Auch in Bereichen mit stark wechselnder Temperatur bringt das Verfahren die entsprechenden Vorteile. Auch wenn es auf äußerst exakte Feuchte-Meßwerte ankommt, bringt das erfindungsgemäße Verfahren Vorteile.

Vorrichtungsseitig wird zur Lösung der Aufgabe vorgeschlagen, eine Vorrichtung mit einem Feuchtesensor, einem Temperaturmeßfühler am Feuchtesensor und einem davon beabstandeten Temperaturmeßfühler für die Umgebungstemperatur sowie einer Einheit zur Erfassung des Feuchtesignals und Temperatursignale und zur Korrektur des Feuchtesignals.

Vorteilhafterweise ist der Temperaturmeßfühler für die Feuchtesensortemperatur direkt am Sensor angekoppelt. Gemäß einem vorteilhaften Vorschlag hat der Meßfühler für die Feuchtesensortemperatur die gleiche Masse wie der Feuchtesensor.

Die Einheit zur Meßsignalerfassung und zur Korrektur des Feuchtewertes umfaßt in vorteilhafter Weise eine einen Rechner aufweisende Schaltung. Grundsätzlich kann technisch die Korrektur des die relative Feuchte repräsentierenden Signal auch über eine Schaltung folgen, beispielsweise eine Transistorschaltung.

Vorteilhaft ist die Verwendung von Rechnereinheiten, da Feuchtesensoren üblicherweise kalibriert werden. Dazu werden diese in Umgebungen mit definierter Feuchte und Temperatur verbracht und einem Meßprogramm unterzogen, welches die Kennlinie des jeweiligen Sensors ergibt. Diese kann bei Verwendung einer Rechnerschaltung direkt mitberücksichtigt werden.

Gemäß einem vorteilhaften Vorschlag der Erfindung ist die Vorrichtung in einem Handmeßgerät angeordnet.

Ein Anwendungsgebiet der Erfindung sind beispielsweise mobile Multifunktionshandmeßgeräte zur Erfassung verschiedener Umweltparameter und verschiedener Meßwerte. So sind beispielsweise Multimeßgeräte für Raum- oder Arbeitsplatzanalysen bekannt, die Umweltbedingungen wie Temperatur, Feuchte, sowie Lichtwerte, EM-Werte und dergleichen erfassen. Aber auch in Produktionsbereichen kann es erforderlich sein, kurzzeitig eine entsprechende Athmosphärenanalyse in einem bestimmten Arbeitsbereich durchführen zu müssen, wobei die Erfindung in bezug auf die relative Feuchte erhebliche Vorteile bringt.

Die Werte werden durch Anwendung der Erfindung insgesamt genauer und vor allem bei Temperaturwechseln auch innerhalb der Adaptionsphase des Feuchtesensors brauchbar.

Weitere Vorteile und Merkmale der Erfindung ergeben sich aus der folgenden Beschreibung anhand der Figur. Dabei zeigt:

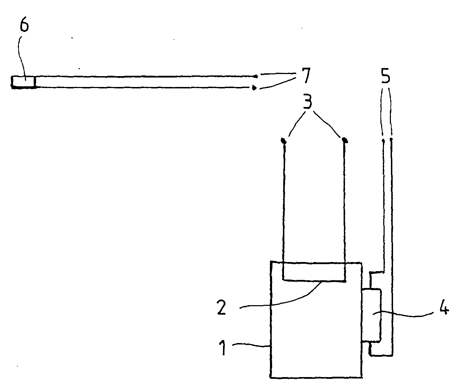

Fig.1 eine schematische Darstellung eines Ausführungsbeispiels der Erfindung.

Fig.1 zeigt schematisch die Anordnung eines Feuchtesensors 1 mit einem Sensorelement 2, welches ein elektrisches Signal 3 liefert, das beispielsweise in einer Auswerteelektronik (nicht gezeigt) zur relativen Feuchtebestimmung verwendet wird. Derartige Sensoren können beispielsweise von Feuchtigkeit abhängige elektrische Eigenschaften haben, die meßbar sind. So kann es sich beispielsweise um einen kapazitiven Polymer-dünnfilmsensor handeln, dessen Kapazitätsänderung zur Luftfeuchte äquivalent ist.

Im gezeigten Ausführungsbeispiel ist an dem Feuchtesensor 1 ein Temperaturmeßfühler 4 direkt angekoppelt, welcher ein die Temperatur des Feuchtesensors repräsentierendes Signal 5 liefert. Örtlich vom Feuchtesensor beabstandet ist ein Temperaturmeßfühler 6 mit kleiner Masse angeordnet, der ein die Umgebungstemperatur repräsentierendes Signal 7 liefert. Dieser Temperaturmeßfühler 6 kann in einem Multifunktionsmeßgerät beispielsweise auch für andere Meßaufgaben ausgewertet werden.

Zur Bestimmung der relativen Feuchte genügt üblicherweise die Auswertung des vom Feuchtesensor 1 gelieferten Signals 3. Unter Kenntnis der Temperatur des Feuchtesensors in Form des Signals 6 und der Temperatur der Umgebung in Form des Signals 7 kann nun das vom Feuchtesensor gelieferte Signal 3 auf die tatsächliche Feuchte korrigiert werden. Dabei kann das Signal direkt oder indirekt bearbeitet werden, d. h., es kann das Meßsignal korrigiert werden oder in einer nachfolgenden Auswerteelektronik der bereits umgesetzte Wert.

Das beschriebene Ausführungsbeispiel dient nur der Erläuterung und ist nicht beschränkend.

**Bezugszeichenliste**

1. Feuchtesensor

2. Sensorelement

3. Feuchtesignal

4. Temperaturmeßfühler

5. Temperatursignal

6. Temperaturmeßfühler

7. Temperatursignal

Formelanhang

Gasgleichung für den Wasserdampf

$$p_w = \frac{eM_w}{TR}$$

dabei ist:

$p_w$  Wasserdampfdichte
e  Wasserdampfdruck
$M_w$  Molekulargewicht des Wasserdampfes = bekannte Konstante
T  Temperatur in Kelvin
R  allgemeine Gaskonstante

Die absolute Feuchte a wird mit der Formel a = $10^6$ $p_w$ beschrieben. ($p_w$ und e in hPa) Also nach Einsetzen der Konstanten $M_w$ und R :

$$\alpha = 10^6 \, pw = 10^6 \, \frac{216{,}7e}{T}$$

a = absolute Feuchte in

$$\frac{g}{m^3}$$

Der Wasserdampfdruck ( Sättigungsdampfdruck) berechnet sich mit der Magnus Formel Sättigungsdampfdruck:

$$E = 6{,}1 \cdot 10^{\frac{a_1 \vartheta}{b_1 + \vartheta}}$$

dabei ist:

E  Sättigungsdampfdruck in hPa
$\vartheta$  Temperatur in °C

Werte für $a_1$ und $b_1$ für Wasser über 0°C:     $a_1$ = 7,45     $b_1$ = 235,0 °C
In die oben angeführte Formel für die absolute Feuchte a wird nun das e durch die Formel für den Sättigugsdampfdruck E ersetzt. Somit beträgt die Sättigungsfeuchte:
Sättigungsfeuchte:

$$A = \frac{216,7}{273°C + \vartheta} \cdot 6,1 \cdot 10^{\frac{c_1 \vartheta}{b_1 + \vartheta}}$$

A= Wassergehalt von Luft bei Sättigung in

$$\frac{g}{m^3}$$

Mit den oben aufgeführten Werten für $a_1$ und $b_1$ ergibt sich folgende Abhängigkeit des Wassergehaltes der Luft bei Sättigung:

$$A = \frac{216,7}{273°C + \vartheta} \cdot 6,1 \cdot 10^{\frac{7,45 \vartheta}{235°C + \vartheta}} \cdot \left[ \frac{g \, °C}{m^3} \right]$$

Die Korrektur der relatven Luftfeuchtigkeit im BAPPU läßt sich somit berechnen mit:

$$RF(\vartheta u) = RF(\vartheta i) \cdot \frac{A(\vartheta i)}{A(\vartheta u)}$$

RF = rF = relative Feuchtigkeit in %

dabei ist

RF     relative Luftfeuchtigkeit
$\vartheta$ i     Temperatur am Feuchtefühler
$\vartheta$ u     Temperatur der Umgebung

$$RF(\vartheta u) = RF(\vartheta i) \cdot \frac{273°C + \vartheta u}{273°C + \vartheta i} \cdot \frac{10^{\frac{7,45 \vartheta i}{235°C + \vartheta i}}}{10^{\frac{7,45 \vartheta u}{235°C + \vartheta u}}}$$

RF = rF = relative Feuchtigkeit in %

**Patentansprüche**

1. Verfahren zur Ermittlung der relativen Feuchte in Luft-Gasgemischen mittels eines Feuchtesensors, der ein zur relativen Feuchte äquivalentes, auswertbares elektrisches Signal liefert, wobei die Temperatur $T_S$ des Feuchtesensors und die Temperatur $T_G$ der Umgebung an einer vom Feuchtesensor beabstandeten Position gemessen werden und das vom Feuchtesensor gelieferte Signal auf einen der Temperatur der Umgebung $T_G$ entsprechende Wert korrigiert wird.

2. Verfahren nach Anspruch 1, **dadurch gekennzeichnet, daß** die Korrektur nur bei einer Differenz zwischen $T_S$ und $T_G$ durchgeführt wird.

3. Verfahren nach einem der vorhergehenden Ansprüche , **dadurch gekennzeichnet, daß** die Korrektur mittels eines Rechners durchgeführt wird.

4.  Verfahren nach einem der vorhergehenden Ansprüche, **dadurch gekennzeichnet, daß** bei der Messung der $T_S$ die Masse des Feuchtigkeitssensors berücksichtigt wird.

5.  Verfahren nach einem der vorhergehenden Ansprüche, **dadurch gekennzeichnet, daß** für die in Messung der Umgebungstemperatur $T_G$ ein Meßfühler mit kleiner Masse oder ein vergleichbares Blitzthermometer verwendet wird.

6.  Vorrichtung zur Ermittlung der relativen Feuchte in Luft-/Gasgemischen nach dem Verfahren nach einem der Ansprüche 1 bis 5, mittels eines Feuchtesensors, der ein zur relativen Feuchte äquivalentes, auswertbares elektrisches Signal liefert, mit einem Temperaturmeßfühler am Feuchtesensor und einem davon beabstandeten Temperaturmeßfühler und einer Einheit zur Erfassung der die Feuchte und die beiden Temperaturen repräsentierenden Signale und zur Korrektur des Feuchtesensorsignals.

7.  Vorrichtung nach Anspruch 6, **dadurch gekennzeichnet, daß** der Temperaturmeßfüller für $T_S$ am Feuchtesensor angekoppelt ist.

8.  Vorrichtung nach einem der Ansprüche 6 oder 7, **dadurch gekennzeichnet, daß** der Temperaturmeßfüller für $T_S$ die gleiche Masse aufweist wie der Feuchtesensor.

9.  Vorrichtung nach einem der Ansprüche 6 bis 8, **dadurch gekennzeichnet, daß** die Einheit zur Erfassung der Meßsignale und zur Korrektur des Feuchtesensor-Signals eine einen Rechner aufweisende Schaltung umfaßt.

10. Vorrichtung nach einem der Ansprüche 6 bis 9, **dadurch gekennzeichnet, daß** die Sensoren und die Schaltung in einem Handmeßgerät angeordnet sind.

**Europäisches**
**Patentamt**

# EUROPÄISCHER RECHERCHENBERICHT

Nummer der Anmeldung

EP 01 10 7242

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 644 080 A (LYYRA MATTI ET AL) 1. Juli 1997 (1997-07-01) * Spalte 3, Zeile 24 - Spalte 5, Zeile 56; Abbildungen 1,2 * | 1,3-7,9, 10 | G01N27/22 |
| X | EP 0 645 620 A (VAISALA OY) 29. März 1995 (1995-03-29) * Spalte 3, Zeile 45 - Zeile 53 * * Spalte 4, Zeile 37 - Spalte 6, Zeile 43 * * Spalte 7, Zeile 38 - Spalte 8, Zeile 27 * * Spalte 10, Zeile 28 - Zeile 32 * * Zusammenfassung * | 1,3-10 | |
| X | US 5 156 045 A (PONKALA JORMA) 20. Oktober 1992 (1992-10-20) * Zusammenfassung * * Spalte 2, Zeile 54 - Spalte 8, Zeile 7; Abbildungen 3,4,6 * | 1,3-7,9, 10 | |
| X | GB 2 011 093 A (VAISALA OY) 4. Juli 1979 (1979-07-04) * Zusammenfassung * * Seite 2, Zeile 21 - Zeile 65; Abbildungen 1,2 * | 1,4-7 | RECHERCHIERTE SACHGEBIETE (Int.Cl.7) G01N G01R |
| X | PATENT ABSTRACTS OF JAPAN vol. 1995, no. 09, 31. Oktober 1995 (1995-10-31) -& JP 07 146273 A (GLORY LTD), 6. Juni 1995 (1995-06-06) * Zusammenfassung; Abbildungen 1,2 * * Absatz '0027! - Absatz '0047! * | 1,3-7,9 | |

-/--

Der vorliegende Recherchenbericht wurde für alle Patentansprüche erstellt

| Recherchenort | Abschlußdatum der Recherche | Prüfer |
|---|---|---|
| MÜNCHEN | 1. August 2001 | Strohmayer, B |

**Europäisches Patentamt**

# EUROPÄISCHER RECHERCHENBERICHT

Nummer der Anmeldung

EP 01 10 7242

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN vol. 018, no. 194 (P-1722), 5. April 1994 (1994-04-05) -& JP 06 003312 A (GLORY LTD), 11. Januar 1994 (1994-01-11) * Zusammenfassung; Abbildungen 1,4,6,8 * * Absatz '0029! * * Absatz '0035! – Absatz '0043! * | 1-7,9 | |
| | | | **RECHERCHIERTE SACHGEBIETE (Int.Cl.7)** |

Der vorliegende Recherchenbericht wurde für alle Patentansprüche erstellt

| Recherchenort | Abschlußdatum der Recherche | Prüfer |
|---|---|---|
| MÜNCHEN | 1. August 2001 | Strohmayer, B |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                EP 01 10 7242

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-08-2001

| Im Recherchenbericht angeführtes Patentdokument | | Datum der Veröffentlichung | Mitglied(er) der Patentfamilie | | Datum der Veröffentlichung |
|---|---|---|---|---|---|
| US 5644080 | A | 01-07-1997 | FI | 945385 A,B, | 16-10-1995 |
| | | | DE | 19513274 A | 23-11-1995 |
| | | | FR | 2718848 A | 20-10-1995 |
| | | | GB | 2288465 A,B | 18-10-1995 |
| | | | GB | 2323928 A,B | 07-10-1998 |
| | | | JP | 2801156 B | 21-09-1998 |
| | | | JP | 7294469 A | 10-11-1995 |
| EP 0645620 | A | 29-03-1995 | FI | 934267 A | 30-03-1995 |
| | | | DE | 69425211 D | 17-08-2000 |
| | | | DE | 69425211 T | 23-11-2000 |
| | | | JP | 7174721 A | 14-07-1995 |
| | | | US | 5511417 A | 30-04-1996 |
| US 5156045 | A | 20-10-1992 | FI | 900873 A | 22-08-1991 |
| | | | AU | 638788 B | 08-07-1993 |
| | | | AU | 6949291 A | 22-08-1991 |
| | | | BR | 9100714 A | 29-10-1991 |
| | | | CA | 2036512 A,C | 22-08-1991 |
| | | | DE | 4105445 A | 22-08-1991 |
| | | | FR | 2661753 A | 08-11-1991 |
| | | | GB | 2241787 A,B | 11-09-1991 |
| | | | IT | 1249236 B | 21-02-1995 |
| | | | ZA | 9100540 A | 27-11-1991 |
| GB 2011093 | A | 04-07-1979 | FI | 773680 A | 03-06-1979 |
| | | | AU | 4203378 A | 07-06-1979 |
| | | | BR | 7807935 A | 31-07-1979 |
| | | | DE | 2851686 A | 07-06-1979 |
| | | | FR | 2410821 A | 29-06-1979 |
| | | | IT | 1100442 B | 28-09-1985 |
| | | | JP | 1051771 B | 06-11-1989 |
| | | | JP | 1582133 C | 11-10-1990 |
| | | | JP | 54094090 A | 25-07-1979 |
| | | | JP | 1677328 C | 13-07-1992 |
| | | | JP | 3040334 B | 18-06-1991 |
| | | | JP | 62063852 A | 20-03-1987 |
| | | | ZA | 7806573 A | 26-03-1980 |
| JP 07146273 | A | 06-06-1995 | KEINE | | |
| JP 06003312 | A | 11-01-1994 | KEINE | | |

EPO FORM P0461

Für nähere Einzelheiten zu diesem Anhang : siehe Amtsblatt des Europäischen Patentamts, Nr.12/82